(19) Europäisches Patentamt
European Patent Office
Office européen des brevets

(11) **EP 1 536 263 B1**

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(51) Int Cl.:
*G02B 13/02* (2006.01)          *G02B 9/64* (2006.01)

(21) Anmeldenummer: **04022369.5**

(22) Anmeldetag: **20.09.2004**

(54) **Hoch geöffnetes Weitwinkel-Projektionsobjektiv**

High-aperture wide angle cinema projection lens

Lentille de projection grand-angulaire à grande ouverture

(84) Benannte Vertragsstaaten:
**DE ES FR GB IT**

(30) Priorität: **28.11.2003 DE 10356338**

(43) Veröffentlichungstag der Anmeldung:
**01.06.2005 Patentblatt 2005/22**

(60) Teilanmeldung:
**10000212.0**

(73) Patentinhaber: **Jos. Schneider Optische Werke GmbH
55543 Bad Kreuznach (DE)**

(72) Erfinder: **Ebbesmeier, Hildegard
55444 Schweppenhausen (DE)**

(74) Vertreter: **Köllner, Malte
Köllner & Partner
Patentanwälte
Vogelweidstrasse 8
60596 Frankfurt am Main (DE)**

(56) Entgegenhaltungen:
**EP-A- 1 134 606      EP-A- 1 489 451
DE-A1- 2 436 444**

• **PATENT ABSTRACTS OF JAPAN Bd. 2003, Nr. 03, 5. Mai 2003 (2003-05-05) -& JP 2002 341242 A (MATSUSHITA ELECTRIC IND CO LTD), 27. November 2002 (2002-11-27)**

**Beschreibung**

Gebiet der Erfindung

Die Erfindung betrifft ein hoch geöffnetes Projektionsobjektiv mit Brennweiten kürzer als 50 mm. Hauptanwendungsgebiet der Erfindung ist die 35 mm Kinoprojektion.

Stand der Technik

Projektionsobjektive für die Projektion von Kinobildern müssen eine Reihe technischer Randbedingungen erfüllen, welche die Auswahl und Anordnung der optischen Elemente beeinflussen. Neben einer hohen Lichtstärke, guter Abbildungsqualität und hoher Schärfentiefe sind auch Einbaubedingungen zu erfüllen. Diese Einbaubedingungen beziehen sich beispielsweise auf die durch kommerzielle Kinoprojektoren vorgegebenen räumlichen Begrenzungen des für das Projektionsobjektiv verfügbaren Raums. So müssen die Durchmesser der verwendeten optischen Elemente, das Gehäuse des Projektionsobjektivs und die Schnittweite, also der Abstand der letzten Linsenoberfläche von der Filmebene, den Einbaubedingungen genügen.
Für kleine Kinosäle mit großen Leinwänden oder für die Rückprojektion sind in der Regel Weitwinkel-Projektionsobjektive erforderlich. In vielen Fällen ist die Gesamtbrennweite des Projektionsobjektivs kürzer als die durch die Einbaubedingungen vorgegebene Schnittweite. Derartige Projektionsobjektive werden als Retrofokus-Projektionsobjektive bezeichnet.
Neben optischen Abbildungsfehlern treten in vielen Projektionsobjektiven Probleme mit der gleichmäßigen Ausleuchtung des Bildes und der Lichtstärke der Anordnung auf. Ein Maß für die Lichtstärke des Projektionsobjektivs ist die sog. Blendenzahl k, welche sich aus der Gesamtbrennweite f' des Projektionsobjektivs und dem Durchmesser der Eintrittspupille $D_{EP}$ berechnet entsprechen

$$k = f'/D_{EP} \qquad\qquad (1)$$

Die Eintrittspupille $D_{EP}$ ist hier als diejenige Öffnung des Projektionsobjektivs definiert, die ein Betrachter aus Richtung des Films wahrnimmt. In der Regel handelt es sich dabei um das Abbild einer Blende innerhalb des Projektionsobjektivs. Eine große Öffnung $D_{EP}$ bewirkt also eine kleine Blendenzahl k und umgekehrt.
Gleichzeitig weist aber auch die für die Projektion verwendete Lichtquelle eine bestimmte Blendenzahl $k_{SP}$ auf. Wenn beispielsweise für die Beleuchtung ein parabolischer oder sphärischer Spiegel mit Brennweite $f_{SP}$ und Randdurchmesser $D_{SP}$ eingesetzt wird, so lässt sich aus dem Verhältnis dieser beiden Größen eine Blendenzahl $k_{SP}$ des Spiegels berechnen. Im Idealfall ist die Blendenzahl des Projektionsobjektivs der Blendenzahl des Spiegels angepasst, um Lichtverluste im Projektionsobjektiv (zu kleine Öffnung) oder ungenügende Ausleuchtung (zu große Öffnung) zu vermeiden.
In EP 1 134 606 B1 wird ein Projektionsobjektiv beschrieben, das aus mindestens sieben beiderseits an Luft angrenzenden Linsen aufgebaut ist. Das Projektionsobjektiv hat eine Blendenzahl von 1,9 und ist gekennzeichnet durch eine Anordnung von Linsen, deren von der Bildseite her betrachtet erste Linse als Positivlinse ausgestaltet ist.
In der DE 24 36 444 C2 wird ein lichtstarkes Weitwinkelobjektiv mit großer bildseitiger Schnittweite beschrieben, das aus mindestens sieben, in der Regel jedoch neun oder zehn beiderseits an Luft angrenzenden Linsen aufgebaut ist. Das Weitwinkelobjektiv ist gekennzeichnet durch eine Anordnung von Linsen, deren von der Bildseite her betrachtet erste Linse als negative Meniskuslinse, zweite Linse als positive Meniskuslinse und dritte Linse als negative Meniskuslinse ausgestaltet sind.

Aufgabe

Aufgabe der Erfindung ist es, ein Projektionsobjektiv mit hervorragender Abbildungsleistung anzugeben,

- welches die handelüblichen Einbaubedingungen erfüllt,
- welches eine Brennweite zwischen 28,0 und 47,5 mm aufweist, und
- dessen Blendenzahl k an die Blendenzahl hoch geöffneter Beleuchtungsspiegel angepasst ist.

Lösung

Diese Aufgabe wird durch die Erfindung mit den Merkmalen des unabhängigen Anspruchs gelöst. Vorteilhafte Weiterbildungen der Erfindungen sind in den Unteransprüchen gekennzeichnet.

Es wird ein Projektionsobjektiv vorgeschlagen, welches dazu geeignet ist, einen Film auf eine Leinwand zu projizieren und in der angegebenen Reihenfolge von der Leinwand aus betrachtet aus folgenden Elementen besteht:

- eine erste negative Linse,
- eine zweite positive Linse,
- eine dritte bikonvexe Linse,
- eine vierte bikonkave Linse,
- eine fünfte bikonkave Linse,
- eine sechste bikonvexe Linse und
- eine siebte bikonvexe Linse.

Es handelt sich um ein Weitwinkel-Projektionsobjektiv, d. h. die Gesamtbrennweite f' des Projektionsobjektivs soll die Bedingung

$$28 \text{ mm} \leq f' \leq 47,5 \text{ mm} \qquad\qquad (2)$$

erfüllen. Um die für die Kinoprojektion erforderliche Schnittweite für das Weitwinkel-Projektionsobjektiv zu erreichen, ist das Projektionsobjektiv als leichtes Retrofokus-Projektionsobjektiv ausgebildet. Dies wird durch die ersten beiden Linsen, die insgesamt eine negative Brennweite aufweisen, erreicht. Weiterhin muss die kleinste Blendenzahl $k_{min}$ des Projektionsobjektivs 1,8 oder kleiner (d. h. $k_{min} \leq 1,8$) sein.

Um eine optimale Korrektur der sphärischen Aberration, besonders bei der kleinen Blendenzahl von k=1,7 zu erzielen, muss mindestens eine Linse des Projektionsobjektivs eine asphärische Oberfläche aufweisen. Es hat sich dabei als zwingend erwiesen, dass die der dritten bikonvexen Linse zugewandte Oberfläche der zweiten positiven Linse als asphärische Oberfläche ausgestaltet ist.

Weiterhin hat es sich als zwingend erwiesen, die Art und Anordnung der Linsen so zu wählen, dass die Eintrittspupille zwischen 100 mm und 300 mm leinwandseitig von der am weitesten filmseitig angeordneten Linsenoberfläche des Projektionsobjektivs entfernt angeordnet ist. Dabei ist die erste negative Linse des Projektionsobjektivs leinwandseitig und die siebte bikonvexe Linse filmseitig angeordnet. Die Eintrittspupille ist dabei als diejenige Öffnung des Projektionsobjektivs definiert, die ein fiktiver, filmseitig positionierter Beobachter wahrnimmt.

Dies hat den Vorteil, dass das projizierte Bild auch in seinen Randbereichen optimal ausgeleuchtet wird. Wird die Eintrittspupille näher als in einem Abstand von 100 mm angeordnet, so wird ein von einem äußerten Bildpunkt ausgehendes Strahlenbündel auf der selben Seite der optischen Achse wie der Bildpunkt auf seiner von der optischen Achse entfernt liegenden Seite durch die Eintrittspupille beschnitten. Es treten dadurch Lichtverluste auf. Wird die Eintrittspupille andererseits in einem Abstand von mehr als 300 mm angeordnet, so wird das selbe Strahlenbündel auf der zum Bildpunkt gegenüberliegenden Seite der optischen Achse auf seiner von der optischen Achse entfernt liegenden Seite durch die Eintrittspupille beschnitten.

Eine weitere zwingende Ausgestaltung des Projektionsobjektivs betrifft die Einbaubedingungen. Die Durchmesser des Projektionsobjektivs müssen so klein ausgebildet sein, dass das Projektionsobjektiv für alle gängigen Kinoprojektoren eingesetzt werden kann. Das Projektionsobjektiv ist daher vorteilhafter Weise in seinen räumlichen Abmessungen derart ausgebildet, dass es zum Betrieb in einen Raum mit den folgenden Abmessungen eingebaut werden kann:

- der Raum ist rotationssymmetrisch um die optische Achse ausgebildet;
- er beginnt in einer ersten Ebene, die senkrecht zur optischen Achse ausgebildet ist und 30 mm von der Filmebene entfernt angeordnet ist;
- leinwandseitig schließt sich an die erste Ebene ein erstes zylindrisches Volumen mit einem Durchmesser von 40 mm und einer Höhe von 8 mm an;
- an das erste zylindrische Volumen schließt sich leinwandseitig ein zweites zylindrisches Volumen mit einem Durchmesser von 46 mm und einer Höhe von 15 mm an; und
- an das zweite zylindrische Volumen schließt sich leinwandseitig ein drittes zylindrisches Volumen mit einem Durchmesser von 70,65 mm an.

Durch diese Weiterbildung werden die Einbaubedingungen bekannter Hersteller von Kinoprojektoren erfüllt.

Das Projektionsobjektiv weist zwischen der zweiten positiven Linse und der dritten bikonvexen Linse eine Blende, insbesondere eine variable Blende, auf. Dies hat den Vorteil, dass gegebenenfalls durch Abblenden eine größere Schärfentiefe erreicht werden kann. Dies ist insbesondere bei gekrümmten Kinoleinwänden von Vorteil, bei denen bei zu geringer Schärfentiefe am Rand des Bildes Unschärfen auftreten würden. Weiterhin kann auch der Film selbst im Fall extremer Hitzeeinwirkung der Lichtquelle stärker als üblich gekrümmt sein, was ebenfalls eine größere Schärfentiefe erforderlich macht. Außerdem können beim Umschalten zwischen verschiedenen Kinoformaten Helligkeitsunterschiede auftreten, welche sich ebenfalls durch den Einsatz einer variablen Blende ausgleichen lassen.

Die Blende wird an einer Stelle angeordnet, an der alle vom Bind ausgehenden Strahlenbündel einen symmetrischen Querschnitt bezüglich der optischen Achse aufweisen. Dadurch wird gewährleistet, dass keine zusätzlichen Randeffekte und Abschattungen (Vignettierung) durch die Blende eintreten.

Wird, wie oben gefordert, eine asphärische Oberfläche zur Korrektur von Abbildungsfehlern eingesetzt, so ist es sinnvoll, die asphärische Oberfläche auf einer der Blende benachbarten Fläche anzuordnen. Dann ermöglicht die asphärische Oberfläche eine optimale Korrektur der sphärischen Aberrationen bei hoher Blendenzahl des Projektionsobjektivs.

Die optischen Elemente bestehen typischerweise aus den für den Aufbau von Projektionsobjektiven üblichen Gläsern bzw. Kunststoffen, die hinsichtlich ihres Brechungsindex und ihrer Dispersionseigenschaften ausgewählt werden. Hinzu kommt eine geeignete Beschichtung zur Entspiegelung der optischen Elemente.

Das vorgeschlagene Projektionsobjektiv hat den Vorteil, dass es auch für Projektoren mit hoch geöffneten Beleuchtungsspiegeln (z. B. mit einer Blendenzahl des Spiegels $k_{sp}$ von 1,7) geeignet ist, da der Aperturwinkel u des Projektionsobjektivs auf den Öffnungswinkel $\alpha$ der Beleuchtungsspiegel angepasst werden kann. Dadurch wird das vom Beleuchtungsspiegel ausgehende Licht optimal genutzt. Gleichzeitig weist das Projektionsobjektiv eine relativ lange Schnittweite auf.

Der beschriebene Aufbau des Projektionsobjektivs kann durch eine Reihe von optionalen Zusatzmerkmalen in seinen optischen Eigenschaften weiter verbessert werden. Diese optionalen Zusatzmerkmale werden im Folgenden beschriebenen.

Aus produktionstechnischen Gründen ist es sinnvoll, wenn die asphärische Oberfläche um nicht mehr als 10 $\mu$m von einer sphärischen Oberfläche abweicht. Die geringe Abweichung der Oberfläche von der sphärischen Gestalt (i. d. R. lediglich 4-7 $\mu$m) ermöglicht ein kostengünstiges Fertigungsverfahren. Außerdem lässt sich so die optische Qualitätsprüfung der Oberfläche stark vereinfachen, da eine Prüfung der Oberfläche mit teuren Hologrammen entfallen kann.

Eine weitere Verbesserung des Projektionsobjektivs lässt sich dadurch erzielen, dass das Projektionsobjektiv derart ausgebildet ist, dass zwischen der Baulänge Sumd, der Schnittweite S'F' und der Gesamtbrennweite f' des Projektionsobjektivs folgende Bedingung erfüllt ist:

$$2,8f' < Sumd + S'F' < 4,5f' \qquad\qquad (3)$$

Die Baulänge Sumd bezeichnet dabei den Abstand zwischen der ersten leinwandseitigen Linsenoberfläche und der letzten filmseitigen Linsenoberfläche.

Die Bedingung (3) stellt das Ergebnis einer Optimierung zwischen gleichmäßiger Ausleuchtung des Bildes und zu hoher Baulänge dar. Für den Fall

$$Sumd + S'F' \leq 2,8f' \qquad\qquad (4)$$

würden infolge ungenügender Ausleuchtung und/oder zu starker Vignettierung Lichtverluste und damit Verluste in der Lichtstärke des Projektionsobjektivs auftreten. Weiterhin würde für zu geringe Schnittweiten der Abstand zwischen Projektionsobjektiv und Filmebene geringer als durch die Einbaubedingungen vorgeschrieben. Für den Fall

$$Sumd + S'F' \geq 4,5f' \qquad\qquad (5)$$

hingegen müssten zu dicke und teure Linsensysteme verwendet werden, so dass die Transmission des Gesamtsystems und damit die Lichtstärke abnimmt.

Eine weitere vorteilhafte Ausgestaltung betrifft eine Serie von Projektionsobjektiven der beschriebenen Art mit unterschiedlichen Brennweiten, die nach dem "Baukastenprinzip" aufgebaut ist. Die Serie von Projektionsobjektiven ist dabei so aufgebaut, dass mindestens 2 Projektionsobjektive unterschiedlicher Brennweite mindestens eine Linse haben, die hinsichtlich

- Material,
- Dicke,
- Krümmungsradien und/oder Form der asphärischen Oberfläche übereinstimmt. Dabei können einzelne Linsen identisch übereinstimmen, oder die Trägerlinse zweier asphärischer Linsen kann identisch sein (wobei die asphärische Oberfläche selbst Unterschiede aufweisen kann), oder es kann auf unterschiedliche Trägerlinsen eine identische asphärische Oberfläche aufgebracht werden. Diese Weiterbildung reduziert die Produktions- und Lagerhaltungskosten erheblich.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    durch die Projektionsobjektivgehäuse verschiedener Hersteller von Kinoprojektionsobjektiven vorgegebene Einbaubedingungen, sowie die Dimensionen eines Beleuchtungsspiegels;

Fig. 2    eine Linsenanordnung eines ersten Ausführungsbeispiels eines hoch geöffneten Kinoprojektionsobjektivs mit 35 mm Brennweite;

Fig. 3    die Auflösung des Kinoprojektionsobjektivs gemäß Fig. 2 bei einer Blendenzahl k von 1,8;

Fig. 4    die Auflösung des Kinoprojektionsobjektivs gemäß Fig. 2 bei einer Blendenzahl k von 2,0;

Fig. 5    die Auflösung des Kinoprojektionsobjektivs gemäß Fig. 2 bei einer Blendenzahl k von 2,8;

Fig. 6    die Auflösung des Kinoprojektionsobjektivs gemäß Fig. 2 bei einer Blendenzahl k von 4,0;

Fig. 7    die relative Beleuchtungsstärke des Kinoprojektionsobjektivs gemäß Fig. 2 bei einer Blendenzahl k von 1,8, 2,0 und 2,4;

Fig. 8    die Verzeichnung des Kinoprojektionsobjektivs gemäß Fig. 2;

Fig. 9    die Transmission des Kinoprojektionsobjektivs gemäß Fig. 2;

Fig. 10    eine Linsenanordnung eines zweiten Ausführungsbeispiels eines hoch geöffneten Kinoprojektionsobjektivs mit 47,5 mm Brennweite;

Fig. 11    die Auflösung des Kinoprojektionsobjektivs gemäß Fig. 10 bei einer Blendenzahl k von 1,8;

Fig. 12    die Auflösung des Kinoprojektionsobjektivs gemäß Fig. 10 bei einer Blendenzahl k von 2,0;

Fig. 13    die Auflösung des Kinoprojektionsobjektivs gemäß Fig. 10 bei einer Blendenzahl k von 2,8;

Fig. 14    die Auflösung des Kinoprojektionsobjektivs gemäß Fig. 10 bei einer Blendenzahl k von 4,0;

Fig. 15    die relative Beleuchtungsstärke des Kinoprojektionsobjektivs gemäß Fig. 10 bei einer Blendenzahl k von 1,8;

Fig. 16    die Verzeichnung des Kinoprojektionsobjektivs gemäß Fig. 10;

Fig. 17    die Transmission des Kinoprojektionsobjektivs gemäß Fig. 10.

Die technischen Daten der in den Figuren dargestellten Ausführungsbeispiele sind in den Tabellen 1 bis 4 aufgelistet. Im Einzelnen zeigt:

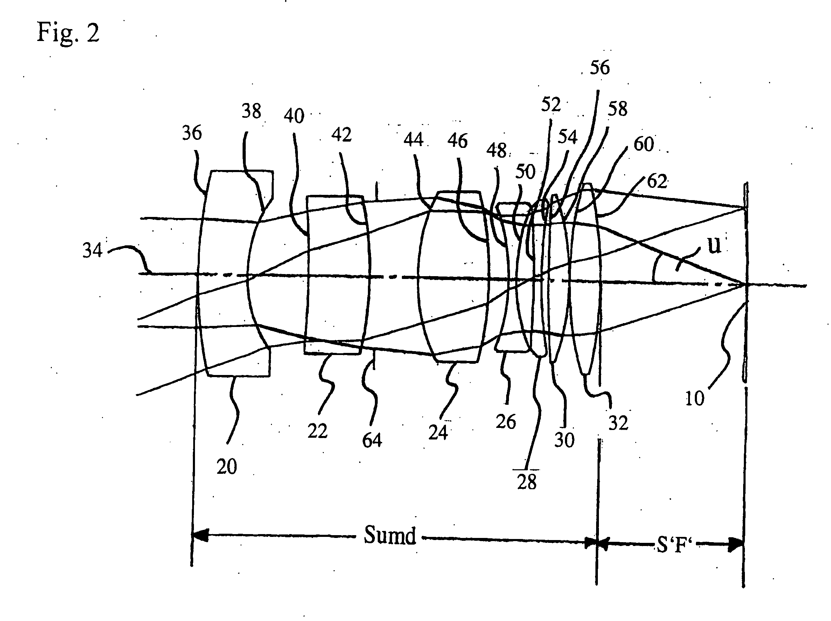

Tab. 1    die technischen Daten des in Fig. 2 dargestellten ersten Ausführungsbeispiels eines Kinoprojektionsobjektivs mit 35 mm Brennweite;

Tab. 2    die Asphärenkoeffizienten der der Blende zugewandten Oberfläche der zweiten positiven Linse des Kinoprojektionsobjektivs gemäß Fig. 2;

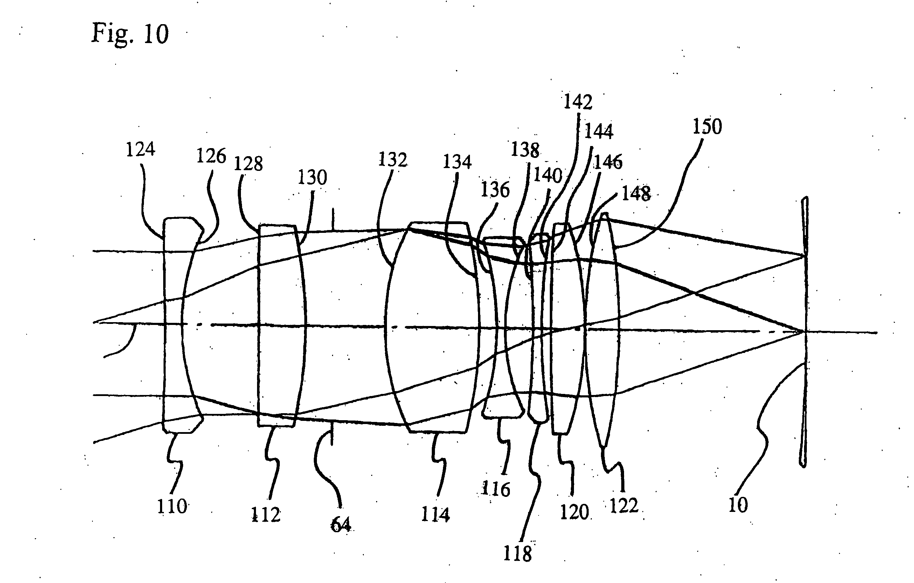

Tab. 3    die technischen Daten des in Fig. 10 dargestellten zweiten Ausführungsbeispiels eines Kinoprojektionsobjektivs mit 47,5 mm Brennweite;

Tab. 4    die Asphärenkoeffizienten der der Blende zugewandten Oberfläche der zweiten positiven Linse des Kinoprojektionsobjektivs gemäß Fig. 10.

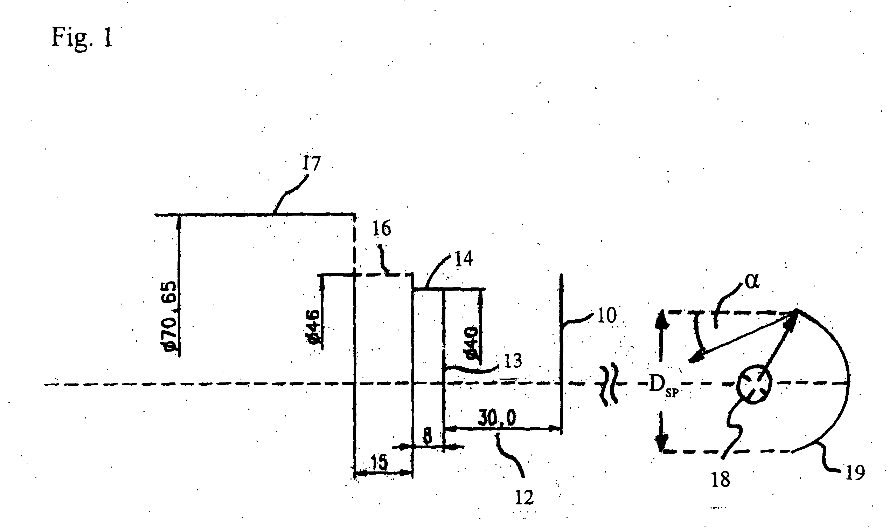

In Fig. 1 sind Grenzkurven der Projektionsobjektivgehäuse zweier weit verbreiteter Kinoprojektoren (Fa. Ernemann Cine Tec GmbH und Fa. Kinoton GmbH) als Beispiel für typische Einbaubedingungen für Projektionsobjektive dargestellt. Ausgehend von der Filmebene 10 kann im Abstand der Schnittweite S'F' (in Fig. 1 mit 12 bezeichnet) ein erstes Linsensystem mit einem maximalen Randdurchmesser 14 von 40 mm und einer Gesamtdicke von 8 mm angeordnet werden. Danach kann ein zweites Linsensystem mit einem maximalen Randdurchmesser 16 von 46 mm und einer Gesamtdicke von 15 mm angeordnet werden. Ein drittes Linsensystem kann maximal einen Randdurchmesser 17 von 70,65 mm aufweisen. Optimaler Weise wird ein Projektionsobjektiv so gestaltet, dass das Linsensystem die Einbaubedingungen beider Hersteller erfüllt.

Weiterhin ist in Fig. 1 auch der Öffnungswinkel $\alpha$ des Lichtkegels des von der Lichtquelle 18 emittierten und vom Beleuchtungsspiegel 19 reflektierten Lichts verdeutlicht. Analog zur Blendenzahl des Projektionsobjektivs ist für den Beleuchtungsspiegel die Blendenzahl $k_{SP}$ als Verhältnis zwischen der Brennweite $f_{SP}$ (nicht eingezeichnet in Fig. 1) und dem Durchmesser $D_{SP}$ des Spiegels definiert.

Erstes Ausführungsbeispiel

Fig. 2 zeigt den prinzipiellen Aufbau eines Projektionsobjektivs gemäß einem ersten Ausführungsbeispiel. Es handelt sich um ein Projektionsobjektiv mit einer Brennweite von 35 mm und einer minimalen Blendenzahl von 1,7.

In der Darstellung gemäß Fig. 2 befindet sich die Leinwand links und Filmebene 10 rechts. Das Projektionsobjektiv gemäß dem ersten Ausführungsbeispiel besteht aus folgenden Elementen in der Reihenfolge von links nach rechts:

- eine erste negative Linse in Form einer Meniskuslinse 20,
- eine zweite positive Linse in Form einer Meniskuslinse 22,
- eine dritte positive Linse in Form einer Bikonvexlinse 24,
- eine vierte negative Linse in Form einer Bikonkavlinse 26,
- eine fünfte negative Linse in Form einer Bikonkavlinse 28,
- eine sechste positive Linse in Form einer Bikonvexlinse 30,
- eine siebte positive Linse in Form einer Bikonvexlinse 32.

Die optische Achse ist mit 34 bezeichnet. Zwischen der zweiten positiven Linse 22 und der dritten positiven Linse 24 ist eine Blende 64 angeordnet.

Die genauen Angaben zu den einzelnen Oberflächen der optischen Elemente finden sich in Tab. 1 zusammen mit den jeweils zugehörigen Bezugsziffern. Die Dispersion in Form der Abbé-Zahl $\nu_d$ in Tab. 1 ist definiert als

$$\nu_d = \frac{n_d - 1}{n_{F'} - n_{C'}} \, , \qquad\qquad (6)$$

wobei $n_{F'}$ der Brechungsindex bei 480 nm, $n_{C'}$ der Brechungsindex bei 643,8 nm und $n_d$ der Brechungsindex bei 588 nm ist.

Die zweite positive Linse 22 weist auf der der Blende 64 zugewandten Oberfläche 42 einer asphärische Oberfläche auf. Die Oberfläche einer asphärischen Linse kann allgemein mit der folgenden Formel beschrieben werden:

$$z = \frac{Cy^2}{1 + \sqrt{1 - (1+K) \cdot C^2 y^2}} + A_4 y^4 + A_6 y^6 + A_8 y^8 + A_{10} y^{10} \qquad\qquad (7)$$

wobei

- $z$ die Pfeilhöhe (in mm) in bezug auf die achsensenkrechte Ebene angibt, also die Richtung der Abweichung von der Ebene senkrecht zur optischen Achse, d. h. in Richtung der optischen Achse.
- $C$ die sogenannte Scheitelkrümmung angibt. Sie dient zur Beschreibung der Krümmung einer konvexen oder konkaven Linsenoberfläche.
- $y$ den Abstand von der optischen Achse (in mm) angibt. $y$ ist eine Radialkoordinate.
- $K$ die sogenannte Konuskonstante angibt.
- $A_4$, $A_6$, $A_8$, $A_{10}$ die sogenannte Asphärenkoeffizienten darstellen, die die Koeffizienten einer Polynomentwicklung der Funktion zur Beschreibung der Oberfläche der Asphäre sind.

Die Asphärenkoeffizienten der Oberfläche 42 sind in Tab. 2 aufgelistet.

Bei geöffneter Blende weist das angegebene Projektionsobjektiv eine Blendenzahl von 1,7 auf. Es können also auch extrem hoch geöffnete Beleuchtungsspiegel mit einem Öffnungswinkel bis ca. 17° als Lichtquelle eingesetzt und effizient genutzt werden.

Im Folgenden werden die Auflösung und die Abbildungseigenschaften des Projektionsobjektivs gemäß dem ersten Ausführungsbeispiel anhand einiger Figuren näher erläutert.

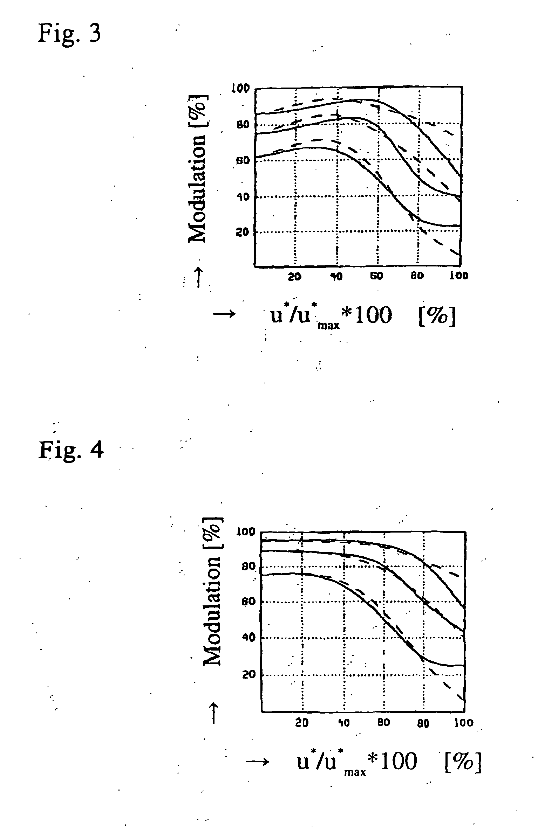

Fig. 3 zeigt die Auflösung des Projektionsobjektivs gemäß dem ersten Ausführungsbeispiel. Bei der Optimierung der unterschiedlichen Abbildungsfehler muss bei der Korrektur der Bildfeldwölbung die durch die große Wärmeentwicklung der Projektionslampe verursachte Krümmung des Filmes am Rand in Richtung des Projektionsobjektivs von 0,1 bis 0,15 mm berücksichtigt werden. Die dargestellten Modulationstransferfunktionen sind für einen derart gekrümmten Film berechnet.

Die Auflösung wurde für eine Farbgewichtung berechnet, die der mittleren Empfindlichkeit des menschlichen Auges entspricht. Gerechnet wurden drei Beispiele: die oberen beiden Kurven gehören zu dem Beispiel mit einer Ortsfrequenz von 20 Linienpaaren pro mm (LP / mm), die mittleren beiden Kurven zu 40 LP /mm und die unteren beiden Kurven zu 80 LP / mm. Die durchgezogene Linie zeigt jeweils die Auflösung von radial verlaufenden Linienpaaren und die gestrichelte Linie die Auflösung von tangential verlaufenden Linienpaaren. Die x-Achse gibt die relative Abweichung vom Zentrum des zu vergrößernden Bildes an. Auf der y-Achse ist die Modulationsübertragungsfunktion bei einer Blendenzahl k von 1,7 dargestellt. Die Abbildung erfolgte quasi ins Unendliche. Die Auflösung des Projektionsobjektivs gemäß dem ersten Ausführungsbeispiel entspricht der Auflösung sehr guter Projektionsobjektive.

Die Figuren 4 bis 6 zeigen die Auflösung des Projektionsobjektivs gemäß dem ersten Ausführungsbeispiel bei einer teilweise geschlossenen Blende:

Fig. 4: Blende 2,0,

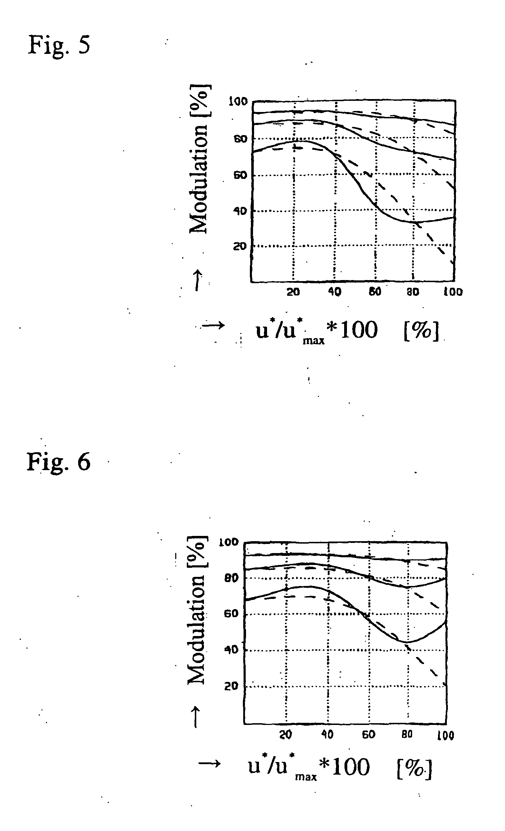

Fig. 5: Blende 2,8,
Fig. 6: Blende 4,0.

Im übrigen entsprechen die Figuren 4 bis 6 der Fig. 3.

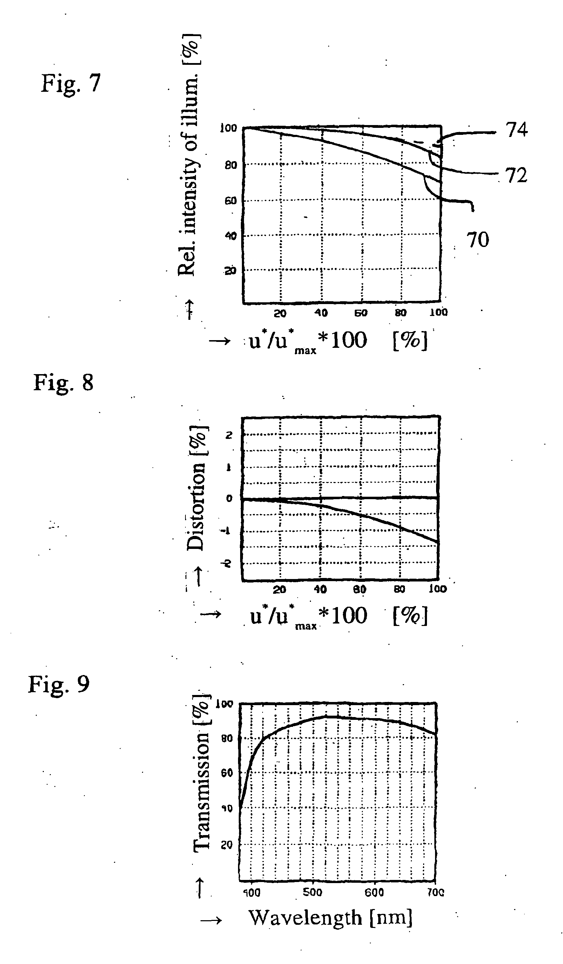

Fig. 7 zeigt die relative Beleuchtungsstärke der Ränder des vergrößerten Bildes verglichen mit dem Zentrum für das Projektionsobjektiv gemäß dem ersten Ausführungsbeispiel. Die x-Achse entspricht der x-Achse gemäß Fig. 3. Die unterste Kurve 70 wurde für eine Blendenzahl von k = 1,7 berechnet, die mittlere Kurve 72 für k = 2,0 und die oberste Kurve 74 für k = 2,8 und 4,0.

Fig. 8 zeigt die Verzeichnung für das Projektionsobjektiv gemäß dem ersten Ausführungsbeispiel in % der Abweichung von der idealen Bildgröße. Man erkennt eine leichte tonnenförmige Verzeichnung, die jedoch im Vergleich zu üblichen Weitwinkel-Projektionsobjektiven gering ist.

In Fig. 9 ist die Transmission in % für das Projektionsobjektiv gemäß Fig. 2 für den Wellenlängenbereich zwischen 400 nm und 700 nm dargestellt. Das Kinoprojektionsobjektiv weist im sichtbaren Wellenlängenbereich tolerable Verluste auf.

Das Kinoprojektionsobjektiv gemäß dem ersten Ausführungsbeispiel weist eine Schnittweite S'F' von 31,898 mm auf. Die Baulänge Sumd des gesamten Projektionsobjektivs beträgt 90,647 mm. Die Summe aus Baulänge und Schnittweite beträgt also 122,545 mm und ist somit größer als 2,8 f' (98 mm) und kleiner als 4,5 f' (157,5 mm). Die oben angegebene Bedingung (3) ist also erfüllt.

Die Eintrittspupille befindet sich 119,87 mm links von der Linsenoberfläche 62, so dass auch die Bedingung an die Lage der Eintrittspupille erfüllt ist.

Zweites Ausführungsbeispiel

Fig. 10 zeigt den prinzipiellen Aufbau eines Kinoprojektionsobjektivs gemäß einem zweiten Ausführungsbeispiel. Es handelt sich um ein Projektionsobjektiv mit einer Brennweite von 47,5 mm und einer Blendenzahl von k = 1,7.

Wiederum befindet sich die Leinwand links und die Filmebene 10 rechts. Das Projektionsobjektiv besteht aus folgenden Elementen in der Reihenfolge von links nach rechts:

- eine erste negative Linse in Form einer Bikonkavlinse 110,
- eine zweite positive Linse in Form einer Bikonvexlinse 112,
- eine dritte positive Linse in Form einer Bikonvexlinse 114,
- eine vierte negative Linse in Form einer Bikonkavlinse 116,
- eine fünfte negative Linse in Form einer Bikonkavlinse 118,
- eine sechste positive Linse in Form einer Bikonvexlinse 120,
- eine siebte positive Linse in Form einer Bikonvexlinse 122.

Zwischen der zweiten positiven Linse 112 und der dritten positiven Linse 114 ist wieder eine Blende 64 angeordnet. Die genauen Angaben zu den einzelnen Oberflächen der optischen Elemente finden sich in Tab. 3 zusammen mit den jeweils zugehörigen Bezugsziffern.

Die der Blende 64 zugewandte Fläche 130 der Linse 112 ist wiederum als asphärische Oberfläche ausgestaltet. Die Asphärenkoeffizienten dieser Oberfläche 130 sind in Tab. 4 aufgeführt.

Bei geöffneter Blende weist auch das im zweiten Ausführungsbeispiel angegebene Projektionsobjektiv eine Blendenzahl von 1,7 auf, so dass wiederum extrem hoch geöffnete Beleuchtungsspiegel eingesetzt werden können.

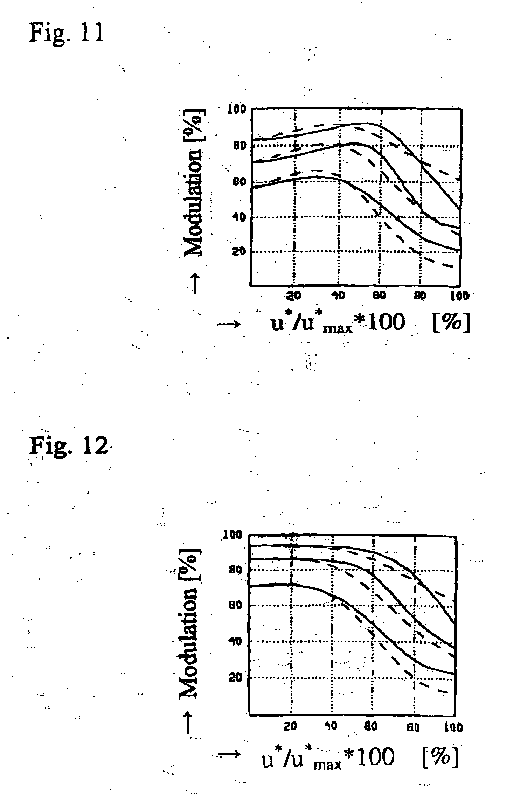

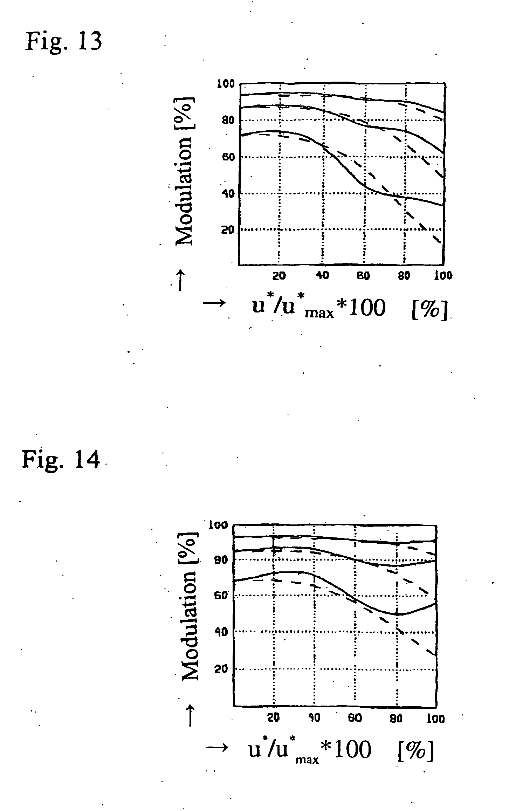

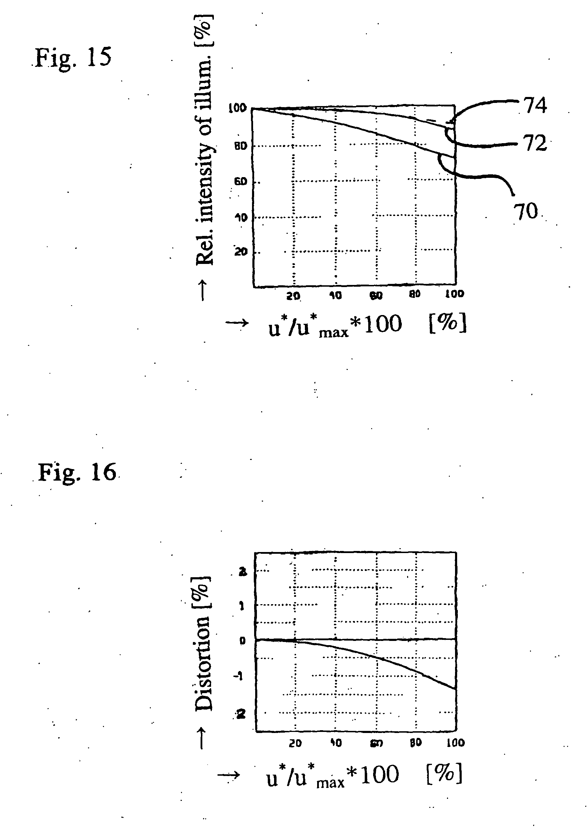

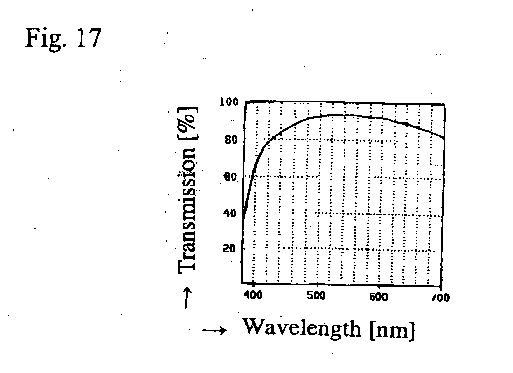

Die Figuren 11 bis 14 entsprechen der Figuren 3 bis 6 des ersten Ausführungsbeispiels und zeigen die Auflösung des Projektionsobjektivs gemäß dem zweiten Ausführungsbeispiel bei Blendenöffnungen k von 1,7, 2,0, 2,8 und 4,0. Die Figuren 15 bis 17 entsprechend den Figuren 7 bis 9 des ersten Ausführungsbeispiels und zeigen wiederum die relative Beleuchtungsstärke, die Verzeichnung und die Transmission des Kinoprojektionsobjektivs gemäß dem zweiten Ausführungsbeispiel.

Das Kinoprojektionsobjektiv gemäß dem zweiten Ausführungsbeispiel weist eine Schnittweite S'F' 12 von 40,002 mm und eine Baulänge Sumd von 101,943 mm auf. Die Summe aus Schnittweite und Baulänge beträgt also 141,945 mm und ist somit größer als 2,8f' (133 mm) und kleiner als 4,5f' (213,75 mm). Die oben angegebene Bedingung wird also durch das Projektionsobjektiv gemäß dem zweiten Ausführungsbeispiel erfüllt

Die Eintrittspupille befindet sich 233,521 mm links von der letzten Linsenoberfläche 150, so dass auch durch das Projektionsobjektiv gemäß dem zweiten Ausführungsbeispiel die Bedingung an die Lage der Eintrittspupille erfüllt ist.

Tab. 1

| Bezugsziffer | Radius / mm | Dicke bzw. Abstand / mm | Freier Durchmesser / mm | Brechzahl ($n_d$) bei 588 nm | Dispersion ($\nu_d$) bei 588 nm |
|---|---|---|---|---|---|
| 36 | 76,068 | | 36,100 | | |
| 20 | | 10,521 | | 1,51680 | 64,14 |
| 38 | 21,464 | | 26,800 | | |
| | | 13,354 | | | |
| 40 | -126,324 | | 24,500 | | |
| 22 | | 13,711 | | 1,72916 | 54,65 |
| 42 | -52,802 * | | 26,600 | | |
| | | 5,000 | | | |
| 64 | (Blende) | | | | |
| | | 6,089 | | | |
| 44 | 29,103 | | 29,000 | | |
| 24 | | 16,346 | | 1,64050 | 60,15 |
| 46 | -51,643 | | 27,200 | | |
| | | 4,476 | | | |
| 48 | -29,981 | | 24,800 | | |
| 26 | | 1,800 | | 1,59270 | 35,30 |
| 50 | 26,691 | | 24,800 | | |
| | | 4,000 | | | |
| 52 | -153,321 | | 24,800 | | |
| 32 | | 1,800 | | 1,80809 | 22,75 |
| 54 | 63,875 | | 26,400 | | |
| | | 1,650 | | | |
| 56 | 169,672 | | 27,500 | | |
| 30 | | 4,800 | | 1,64050 | 60,15 |
| 58 | -38,663 | | 28,500 | | |
| | | 0,100 | | | |
| 60 | 53,566 | | 32,800 | | |

(fortgesetzt)

| Bezugsziffer | Radius / mm | Dicke bzw. Abstand / mm | Freier Durchmesser / mm | Brechzahl (n_d) bei 588 nm | Dispersion (ν_d) bei 588 nm |
|---|---|---|---|---|---|
| 32 | | 7,000 | | 1,75500 | 52,30 |
| 62 | -67,549 | | 33,000 | | |
| (* = asphärische Oberfläche) | | | | | |

Tab. 2

| | |
|---|---|
| C | 0,018939 |
| K | 0,000000 |
| $A_4$ | $-0,531052 \times 10^{-6}$ |
| $A_6$ | $0,523980 \times 10^{-9}$ |
| $A_8$ | $-0,131713 \times 10^{-10}$ |
| $A_{10}$ | $0,319473 \times 10^{-13}$ |

Tab. 3

| Bezugsziffer | Radius / mm | Dicke bzw. Abstand / mm | Freier Durchmesser / mm | Brechzahl (n_d) bei 588 nm | Dispersion (ν_d) bei 588 nm |
|---|---|---|---|---|---|
| 124 | -784,753 | | 38,300 | | |
| 110 | | 3,500 | | 1,51880 | 64,14 |
| 126 | 37,095 | | 34,700 | | |
| | | 16,090 | | | |
| 128 | 1219,347 | | 33,500 | | |
| 112 | | 10,160 | | 1,732916 | 54,65 |
| 130 | -73,026 * | | 35,400 | | |
| | | 6,000 | | | |
| 64 | (Blende) | | | | |
| | | 11,797 | | | |
| 132 | 35,655 | | 37,000 | | |
| 114 | | 21,730 | | 1,644050 | 60,15 |
| 134 | -66,489 | | 33,800 | | |
| | | 4,056 | | | |
| 136 | -42,288 | | 31,300 | | |
| 116 | | 2,000 | | 1,59270 | 35,30 |
| 138 | 28,976 | | 30,200 | | |
| | | 6,480 | | | |
| 140 | -142,587 | | 31,100 | | |
| 118 | | 2,000 | | 1,80809 | 22,75 |
| 142 | 85,779 | | 33,000 | | |

(fortgesetzt)

| Bezugsziffer | Radius / mm | Dicke bzw. Abstand / mm | Freier Durchmesser / mm | Brechzahl ($n_d$) bei 588 nm | Dispersion ($\nu_d$) bei 588 nm |
|---|---|---|---|---|---|
|  |  | 2,160 |  |  |  |
| 144 | 352,026 |  | 34,600 |  |  |
| 120 |  | 7,570 |  | 1,64050 | 60,15 |
| 146 | -52,233 |  | 37,000 |  |  |
|  |  | 0,100 |  |  |  |
| 148 | 65,539 |  | 41,300 |  |  |
| 122 |  | 8,300 |  | 1,75500 | 52,30 |
| 150 | -81,787 |  | 41,400 |  |  |
| (* = asphärische Oberfläche) | | | | | |

Tab. 4

| C | -0,013694 |
|---|---|
| K | 0,000000 |
| $A_4$ | $0,601508*10^{-7}$ |
| $A_6$ | $0,565724*10^{-9}$ |
| $A_8$ | $-0,223813*10^{-11}$ |
| $A_{10}$ | $0,330861*10^{-14}$ |

Bezugszeichen

10     Filmebene
12     Schnittweite S'F'
13     erste Ebene
14     maximaler Randdurchmesser eines ersten Linsensystems
16     maximaler Randdurchmesser eines zweiten Linsensystems
17     maximaler Randdurchmesser eines dritten Linsensystems
18     Lichtquelle
19     Beleuchtungsspiegel
20     erste negative Linse in Form einer Meniskuslinse
22     zweite positive Linse
24     dritte positive Linse in Form einer Bikonvexlinse
26     vierte negative Linse in Form einer Bikonkavlinse
28     fünfte negative Linse in Form einer Bikonkavlinse
30     sechste positive Linse in Form einer Bikonvexlinse
32     siebte positive Linse in Form einer Bikonvexlinse
34     optische Achse
36     erste Oberfläche der Linse 20
38     zweite Oberfläche der Linse 20
40     erste Oberfläche der Linse 22
42     zweite Oberfläche der Linse 22
44     erste Oberfläche der Linse 24
46     zweite Oberfläche der Linse 24
48     erste Oberfläche der Linse 26
50     zweite Oberfläche der Linse 26

52   erste Oberfläche der Linse 28
54   zweite Oberfläche der Linse 28
56   erste Oberfläche der Linse 30
58   zweite Oberfläche der Linse 30
60   erste Oberfläche der Linse 32
62   zweite Oberfläche der Linse 32
64   Blende
70   relative Beleuchtungsstärke bei Blendenöffnung 1,8
72   relative Beleuchtungsstärke bei Blendenöffnung 2,0
74   relative Beleuchtungsstärke bei Blendenöffnung 2,8
110   erste negative Linse des zweiten Ausführungsbeispiels
112   zweite positive Linse des zweiten Ausführungsbeispiels
114   dritte positive Linse des zweiten Ausführungsbeispiels
116   vierte negative Linse des zweiten Ausführungsbeispiels
118   fünfte negative Linse des zweiten Ausführungsbeispiels
120   sechste positive Linse des zweiten Ausführungsbeispiels
122   siebte positive Linse des zweiten Ausführungsbeispiels
124   erste Oberfläche der Linse 110
126   zweite Oberfläche der Linse 110
128   erste Oberfläche der Linse 112
130   zweite Oberfläche der Linse 112
132   erste Oberfläche der Linse 114
134   zweite Oberfläche der Linse 114
136   erste Oberfläche der Linse 116
138   zweite Oberfläche der Linse 116
140   erste Oberfläche der Linse 118
142   zweite Oberfläche der Linse 118
144   erste Oberfläche der Linse 120
146   zweite Oberfläche der Linse 120
148   erste Oberfläche der Linse 122
150   zweite Oberfläche der Linse 122

**Patentansprüche**

1. Projektionsobjektiv, welches dazu geeignet ist, einen Film auf eine Leinwand zu projizieren und in der angegebenen Reihenfolge von der Leinwand aus betrachtet aus folgenden Elementen besteht:

   - eine erste negative Linse (20; 110);
   - eine zweite positive Linse (22; 112);

      - wobei die ersten beiden Linsen insgesamt eine negative Brennweite aufweisen um das Projektionsobjektiv als Retrofokus-Projektionsobjektiv auszubilden;

   - eine dritte bikonvexe Linse (24; 114);
   - eine Blende (64) zwischen der zweiten positiven Linse (22; 112) und der dritten bikonvexen Linse (24; 114);
   - wobei die der dritten bikonvexen Linse (24; 114) zugewandte Oberfläche (42; 130) der zweiten positiven Linse (22; 112) als asphärische Oberfläche ausgestaltet ist;
   - eine vierte bikonkave Linse (26; 116);
   - eine fünfte bikonkave Linse (28; 118);
   - eine sechste bikonvexe Linse (30; 120); und
   - eine siebte bikonvexe Linse (32; 122); und
   - wobei die Gesamtbrennweite f' des Objektivs die Bedingung

$$28 \text{ mm} \leq f' \leq 47,5 \text{ mm}$$

erfüllt;

- wobei die kleinste Blendenzahl k des Projektionsobjektivs 1,8 oder kleiner ist;

- wobei das Projektionsobjektiv eine Eintrittspupille für einen fiktiven, filmseitig positionierten Beobachter aufweist;

- wobei die Eintrittspupille zwischen 100 mm und 300 mm leinwandseitig von der am weitesten filmseitig angeordneten Linsenoberfläche (62; 150) des Projektionsobjektivs entfernt angeordnet ist; und

- wobei das Projektionsobjektiv in seinen räumlichen Abmessungen derart ausgebildet ist, dass es zum Betrieb in einen Raum mit den folgenden Abmessungen eingebaut werden kann:

der Raum ist rotationssymmetrisch um die optische Achse ausgebildet;

er beginnt in einer ersten Ebene (13), die senkrecht zur optischen Achse ausgebildet ist und 30 mm von der Filmebene (10) entfernt angeordnet ist;

leinwandseitig schließt sich an die erste Ebene (13) ein erstes zylindrisches Volumen mit einem Durchmesser von 40 mm und einer Höhe von 8 mm an;

an das erste zylindrische Volumen schließt sich leinwandseitig ein zweites zylindrisches Volumen mit einem Durchmesser von 46 mm und einer Höhe von 15 mm an; und

an das zweite zylindrische Volumen schließt sich leinwandseitig ein drittes zylindrisches Volumen mit einem Durchmesser von 70,65 mm an.

2. Projektionsobjektiv nach dem vorhergehenden Anspruch,
wobei die asphärische Oberfläche (42; 130) um nicht mehr als 10 $\mu$m von einer sphärischen Oberfläche abweicht.

3. Projektionsobjektiv nach einem der vorhergehenden Ansprüche,
**dadurch gekennzeichnet,**
**dass** es derart ausgebildet ist, dass zwischen der Baulänge Sumd, der Schnittweite S'F' (12) und der Gesamtbrennweite f' des Projektionsobjektivs folgende Bedingung erfüllt ist:

$$2,8f' < Sumd + S'F' < 4,5f'.$$

4. Serie von Projektionsobjektiven nach einem der vorhergehenden Ansprüche mit unterschiedlichen Brennweiten f',
**dadurch gekennzeichnet,**
**dass** mindestens 2 Projektionsobjektive unterschiedlicher Brennweite mindestens eine Linse haben, die hinsichtlich

- Material,
- Dicke,
- Krümmungsradien und/oder Form der asphärischen Oberfläche übereinstimmt.

**Claims**

1. Projection lens which is suitable for projecting a film onto a projection screen and which consists of the following elements when viewed from the projection screen in the specified sequence:

- a first negative lens (20; 110);
- a second positive lens (22; 112);
- in which the first two lenses together have a negative focal length in order to design the projection lens as a retrofocus projection lens,
- a third biconvex lens (24; 114);
- a diaphragm (64) between the second positive lens (22; 112) and the third biconvex lens (24; 114);
- in which the surface (42; 130), facing the third biconvex lens (24; 114), of the second positive lens (22; 112) is configured as an aspheric surface;
- a fourth biconcave lens (26; 116);
- a fifth biconcave lens (28; 118);
- a sixth biconvex lens (30; 120); and
- a seventh biconvex lens (32; 122); and
- in which the total focal length f' of the lens satisfies the condition

$$28 \text{ mm} \leq f' \leq 47.5 \text{ mm};$$

- in which the smallest stop number k of the projection lens is 1.8 or less;
- in which the projection lens has an entrance pupil for a fictitious observer positioned on the film side;
- in which the entrance pupil is arranged on the projection screen side at a distance of between 100 mm and 300 mm from the lens surface (62; 150) of the projection lens which is arranged furthest on the film side; and
- in which the spatial dimensions of the projection lens are designed in such a way that it can be installed for operating purposes in a space having the following dimensions:

the space is designed to be rotationally symmetrical about the optical axis;
it starts in a first plane (13), which is designed perpendicular to the optical axis and is arranged at a distance of 30 mm from the film plane (10);
on the projection screen side the first plane (13) is adjoined by a first cylindrical volume with a diameter of 40 mm and a height of 8 mm;
the first cylindrical volume is adjoined on the projection screen side by a second cylindrical volume with a diameter of 46 mm and a height of 15 mm; and
the second cylindrical volume is adjoined on the projection screen side by a third cylindrical volume with a diameter of 70.65 mm.

2.  Projection lens according to the preceding claim, in which the aspheric surface (42; 130) deviates from a spherical surface by not more than 10 μm.

3.  Projection lens according to one of the preceding claims, **characterized in that** it is designed in such a way that the following condition is fulfilled between the overall length Sumd, the back focus S'F' (12) and the total focal length f' of the projection lens:

$$2.8f' < \text{Sumd} + \text{S'F'} < 4.5f'.$$

4.  Series of projection lenses according to one of the preceding claims with different focal lengths f', **characterized in that** at least 2 projection lenses of different focal length have at least one lens which corresponds with regard to

- material
- thickness, and
- radii of curvature and/or shape of the aspheric surface.

**Revendications**

1.  Lentille de projection, qui convient pour projeter un film sur un écran de projection et qui se compose des éléments suivants, considérés dans l'ordre indiqué à partir de l'écran de projection:

- une première lentille négative (20; 110);
- une deuxième lentille positive (22; 112);

- dans laquelle les deux premières lentilles présentent au total une distance focale négative pour réaliser la lentille de projection sous la forme d'une lentille de projection rétrofocus,

- une troisième lentille biconvexe (24; 114);
- un diaphragme (64) entre la deuxième lentille positive (22; 112) et la troisième lentille biconvexe (24; 114);
- dans laquelle la surface (42; 130) de la deuxième lentille positive (22; 112) tournée vers la troisième lentille biconvexe (24; 114) est formée par une surface asphérique;
- une quatrième lentille biconcave (26; 116);
- une cinquième lentille biconcave (28; 118);
- une sixième lentille biconvexe (30; 120);
- une septième lentille biconvexe (32; 122); et

- dans laquelle la distance focale totale f' de la lentille de projection remplit la condition

$$28 \text{ mm} \leq f' \leq 47,5 \text{ mm}$$

- dans laquelle la plus petite valeur de diaphragme k de la lentille de projection est égale ou inférieure à 1,8;
- dans laquelle la lentille de projection présente une pupille d'entrée pour un observateur fictif, positionné du côté du film;
- dans laquelle la pupille d'entrée est disposée à une distance comprise entre 100 mm et 300 mm, du côté de l'écran de projection, à partir de la surface de lentille (62; 150) de la lentille de projection disposée le plus loin du côté du film; et
- dans laquelle la lentille de projection est réalisée, dans ses dimensions spatiales, de telle manière qu'elle puisse être montée pour le fonctionnement dans un espace présentant les dimensions suivantes:

- l'espace présente la symétrie de révolution autour de l'axe optique;
- il commence dans un premier plan (13), qui est perpendiculaire à l'axe optique et qui est disposé à une distance de 30 mm du plan du film (10);
- du côté de l'écran de projection, il se raccorde au premier plan (13) un premier volume cylindrique avec un diamètre de 40 mm et une hauteur de 8 mm;
- au premier volume cylindrique succède, du côté de l'écran de projection, un deuxième volume cylindrique avec un diamètre de 46 mm et une hauteur de 15 mm; et
- au deuxième volume cylindrique succède, du côté de l'écran de projection, un troisième volume cylindrique avec un diamètre de 70,65 mm.

2. Lentille de projection selon la revendication précédente, dans laquelle la surface asphérique (42; 130) ne s'écarte pas de plus de 10 $\mu$m d'une surface sphérique.

3. Lentille de projection selon l'une quelconque des revendications précédentes, **caractérisée en ce qu'**elle est réalisée de telle manière qu'elle respecte la condition suivante liant la longueur de construction Sumd, la distance focale frontale S'F' (12) et la distance focale totale f' de la lentille de projection:

$$2,8 \text{ f'} < \text{Sumd} + \text{S'F'} < 4,5 \text{ f'}.$$

4. Série de lentilles de projection selon l'une quelconque des revendications précédentes avec des distances focales f' différentes, **caractérisée en ce qu'**au moins 2 lentilles de projection à distance focale différente comprennent au moins une lentille, qui coïncide avec la surface asphérique en ce qui concerne

- le matériau
- l'épaisseur
- les rayons de courbure et/ou la forme.

EP 1 536 263 B1

Fig. 1

Fig. 2

Fig. 3

$$\rightarrow \quad u^*/u^*_{max}*100 \quad [\%]$$

Fig. 4

$$\rightarrow \quad u^*/u^*_{max}*100 \quad [\%]$$

Fig. 5

$$\rightarrow \quad u^{*}/u^{*}_{max}*100 \quad [\%]$$

Fig. 6

$$\rightarrow \quad u^{*}/u^{*}_{max}*100 \quad [\%]$$

Fig. 7

Fig. 8

Fig. 9

Fig. 10

Fig. 11

$$\rightarrow \quad u^*/u^*_{max}*100 \quad [\%]$$

Fig. 12

$$\rightarrow \quad u^*/u^*_{max}*100 \quad [\%]$$

Fig. 13

Modulation [%]

↑
→ $u^*/u^*_{max}*100$ [%]

Fig. 14

Modulation [%]

↑
→ $u^*/u^*_{max}*100$ [%]

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1134606 B1
- DE 2436444 C2